# EUROPÄISCHE PATENTANMELDUNG

(11) **EP 1 923 241 A1**
(43) Veröffentlichungstag der Anmeldung: **21.05.2008**
(21) Anmeldenummer: 07033537.7
(22) Anmeldetag: 30.10.2007
(51) Int. Cl.: B60H 1/00

(54) **Kraftfahrzeug mit einer Klimaanlage und Verfahren zur Standklimatisierung eines Kraftfahrzeugs**

(30) Priorität: 15.11.2006 DE 102006053912
(71) Anmelder: Webasto AG, 82131 Stockdorf (DE)
(72) Erfinder: Pfalzgraf, Manfred, 82211 Herrsching am Ammersee (DE); Bedenbecker, Markus, 82131 Gauting (DE); Boltze, Matthias, 17039 Wulkenzin (OT Neuendorf) (DE); Engl, Andreas, 80689 München (DE)
(74) Vertreter: Schumacher & Willsau

(57) **Zusammenfassung**

Die Erfindung betrifft ein Kraftfahrzeug (10) mit einer Klimaanlage (12), die eine Brennstoffzelle (26) aufweist, wobei eine Luftführung zum Zuführen von Luft in einen zu konditionierenden Fahrzeuginnenraum (78) und zum Abführen von Luft aus dem Fahrzeuginnenraum vorgesehen ist.

Erfindungsgemäß ist vorgesehen dass die Klimaanlage (12) im Kofferraum des Kraftfahrzeugs (10) angeordnet ist und dass die Luftführung Luftkanäle (96) aufweist, die in einem Sitz (80) des Kraftfahrzeugs (10) angeordnet sind und in den Fahrzeuginnenraum (78) münden.

Die Erfindung betrifft weiterhin ein Verfahren zur Standklimatisierung eines Kraftfahrzeugs.

## Beschreibung

Die Erfindung betrifft ein Kraftfahrzeug mit einer Klimaanlage, die eine Brennstoffzelle aufweist, wobei eine Luftführung zum Zuführen von Luft in einen zu konditionierenden Fahrzeuginnenraum und zum Abführen von Luft aus dem Fahrzeuginnenraum vorgesehen ist.

Die Erfindung betrifft weiterhin ein Verfahren zur Standklimatisierung eines Kraftfahrzeugs mit einer Klimaanlage, die eine Brennstoffzelle aufweist, wobei Luft einem zu konditionierenden Fahrzeuginnenraum zugeführt wird und Luft aus dem Fahrzeuginnenraum abgeführt wird.

Aus der DE 102 23 949 A1 ist eine Standklimaanlage mit einer Brennstoffzelle zur Klimatisierung eines Fahrzeugs bekannt.

Derartige Klimaanlangen werden häufig im Rahmen einer Nachrüstig in Kraftfahrzeuge eingebaut. Dies geschieht insbesondere dann, wenn beabsichtigt ist, das Kraftfahrzeug in Regionen der Erde einzusetzen, in denen ein besonders hoher Klimatisierungsbedarf besteht. Insbesondere bei der Nachrüstung aber auch beim serienmäßigen Einbau von Standklimaanlagen besteht die Problematik, dass eine geeignete Einbauposition der Klimaanlage im Kraftfahrzeug gefunden werden muss. Des Weiteren ist es erforderlich, die konditionierte Luft in geeigneter Weise in den Fahrzeuginnenraum einzubringen und ein entsprechendes Luftvolumen aus dem Fahrzeuginnenraum abzuführen. In diesem Zusammenhang ist man bestrebt, die Innenausstattung des Fahrzeugs in möglichst geringem Maße zu verändern. Dies betrifft sowohl das optische Erscheinungsbild auch als die Funktionalität. In den Fahrzeuginnenraum mündende Luftführungen sind daher in geeigneter Weise zu kaschieren oder an Positionen anzuordnen, die ohnehin nicht einsehbar sind, gleichzeitig aber einen im Hinblick auf die Funktionalität geeigneten Teil der Luftzirkulation im Kraftfahrzeug darstellen können.

Der Erfindung liegt die Aufgabe zugrunde, eine Klimaanlage in geeigneter Weise in einem Kraftfahrzeug anzuordnen, wobei insbesondere die Anbindung die Luftführung an den Fahrzeuginnenraum in vorteilhafter Weise auszulegen ist.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung baut auf dem gattungsgemäßen Kraftfahrzeug dadurch auf, dass die Klimaanlage im Kofferraum des Kraftfahrzeugs angeordnet ist und dass die Luftführung Luftkanäle aufweist, die in einem Sitz des Kraftfahrzeugs angeordnet sind und in den Fahrzeuginnenraum münden. Die Anordnung der Klimaanlage im Kofferraum eines Kraftfahrzeugs bietet sich an, da hier der größte freie Bauraum zur Verfügung steht, speziell bei Fahrzeugen der Oberklasse, die für den Einbau einer Standklimatisierung besonders in betracht kommen. Da man jedoch im Fond dieser Fahrzeuge keine störenden Einbauten, wie etwa Luftschlitze oder dergleichen, erkennen möchte, ist erfindungsgemäß vorgesehen, die in den Fahrzeuginnenraum mündenden Luftkanäle zumindest teilweise in einem oder mehreren Sitzen des Kraftfahrzeugs anzuordnen. Fahrzeugsitze sind entweder mit einer Oberfläche aus Textilien oder, speziell in der Oberklasse, aus hochwertigem Kunstleder oder Leder ausgestattet. Derartige Oberflächen bieten aufgrund ihrer natürlichen Textur oder aufgrund einer eigens hierfür eingebrachten optisch ansprechenden Struktur die Möglichkeit, Luftkanäle unauffällig in den Fahrzeuginnenraum münden zu lassen. Die Anordnung dieser Luftkanäle kann unregelmäßig sein und sich beispielsweise der natürlichen Narbung eines Ledersitzes anpassen. Ebenfalls kann gewollt ein regelmäßiges Mündungsmuster vorgesehen werden, um so dem Sitz eine bestimmte Oberflächengestaltung zu vermitteln.

Nützlicherweise ist vorgesehen, dass der Sitz ein Rücksitz ist. In diesem Fall kann die Luftführung zwischen dem Kofferraum und den Luftkanälen im Sitz besonders kurz und daher mit geringem Aufwand gestaltet werden.

Beispielsweise kann vorgesehen sein, dass über zumindest einen Teil der Luftkanäle Luft in den Fahrzeuginnenraum einströmt. Dies hat den zusätzlichen besonderen Vorteil, dass eine effiziente Kühlung des Sitzes stattfindet. Dies ist im Hinblick auf die Standklimatisierung nützlich, da es gerade an heißen Tagen besonders angenehm ist, auf einem vorgekühlten Sitz Platz zu nehmen. Weitere Vorteile bestehen aber auch dann, wenn die Klimaanlage während der Fahrt des Fahrzeugs betrieben wird, da dann eine permanente Kühlung des menschlichen Körpers über den Sitz erfolgen kann.

Es kann ebenfalls vorgesehen sein, dass über zumindest einen Teil der Luftkanäle Luft aus dem Fahrzeuginnenraum abströmt. Über die Luftkanäle im Sitz wird somit Luft abgesaugt. Dies hat eine trocknende Wirkung, insbesondere im Hinblick auf die Schweißbildung bei einem Fahrzeuginsassen.

Es kann vorgesehen sein, dass die Luftkanäle zumindest teilweise eine Drosselwirkung aufbringen. Hierdurch kann ein besonders gut dosiertes Abströmen oder Zuströmen von Luft realisiert werden, was speziell dann erwünscht ist, wenn der die Luftkanäle enthaltende Sitz besetzt ist.

Ebenfalls kann vorgesehen sein, dass die Luftkanäle zumindest teilweise keine Drosselwirkung aufbringen. Dies ist besonders im Hinblick auf die Standklimatisierung nützlich, da keine überflüssigen Strömungswiderstände in das Luftführungssystem eingebracht werden.

Weiterhin kann vorgesehen sein, dass die Luftkanäle zumindest teilweise verschließbar sind. So kann beispielsweise eine Hälfte der Sitzbank mittels der Luftkanäle an der Luftzirkulation teilnehmen, während der andere Teil davon ausgeschlossen ist. Dies kann im Hinblick auf unterschiedliche Komfortwünsche der Insassen nützlich sein. Gleichzeitig steigt die Variabilität des Gesamtsystems.

Die Erfindung baut auf dem gattungsgemäßen Verfahren dadurch auf, dass die Luft zumindest teilweise über Luftkanäle geführt wird, die in einem Sitz des Kraftfahrzeugs angeordnet sind und in den Fahrzeuginnenraum münden. Auf diese Weise werden die Vorteile und Besonderheiten des erfindungsgemäßen Kraftfahrzeugs auch im Zusammenhang mit einem Verfahren realisiert. Dies gilt auch für die nachfolgend angegebenen besonders vorteilhaften Ausführungsformen.

Nützlicherweise ist vorgesehen, dass die Klimaanlage im Kofferraum des Kraftfahrzeugs angeordnet ist und der Sitz ein Rücksitz ist.

Das erfindungsgemäße Verfahren ist in besonders vorteilhafter Weise dadurch weitergebildet, dass über zumindest einen Teil der Luftkanäle Luft in den Fahrzeuginnenraum einströmt.

Alternativ oder zusätzlich kann vorgesehen sein, dass über zumindest einen Teil der Luftkanäle Luft aus dem Fahrzeuginnenraum abströmt.

Es kann nützlich sein, dass die Luftkanäle zumindest teilweise eine Drosselwirkung aufbringen.

Das Verfahren kann auch in der Weise vorteilhaft ausgebildet sein, dass die Luftkanäle zumindest teilweise keine Drosselwirkung aufbringen.

Ebenfalls kann es nützlich sein, dass die Luftkanäle zumindest teilweise verschließbar sind.

Bevorzugte Ausführungsformen der Erfindung werden nachfolgend mit Bezug auf die begleitenden Zeichnungen beispielhaft erläutert.

Es zeigen:
- Figur 1: eine schematische Darstellung einer erfindungsgemäßen Klimaanlage gemäß einem ersten Ausführungsbeispiel;
- Figur 2: eine schematische Darstellung des Kraftfahrzeugs mit der erfindungsgemäßen Klimaanlage gemäß dem ersten Ausführungsbeispiel;
- Figur 3: eine schematische Darstellung des Kraftfahrzeugs mit der erfindungsgemäßen Klimaanlage gemäß einem zweiten Ausführungsbeispiel; und
- Figur 4: ein Flussdiagramm des erfindungsgemäßen Klimatisierungsbetriebs.

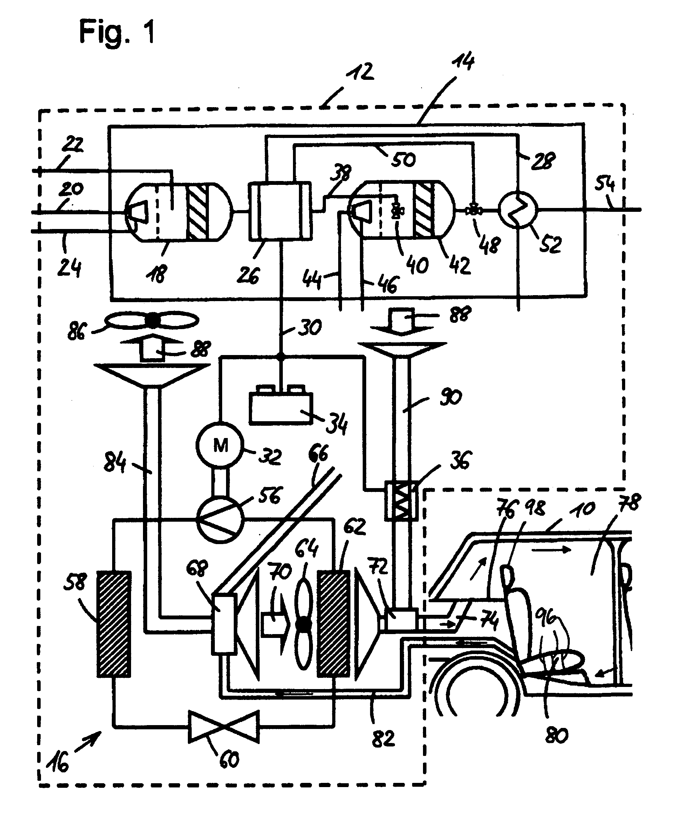

Figur 1 zeigt eine schematische Darstellung einer erfindungsgemäßen Klimaanlage gemäß einem ersten Ausführungsbeispiel. Die in einem Kraftfahrzeug 10 installierte Klimaanlage 12, die mit einer gestrichelten Linie umrissen ist, umfasst als Hauptelemente ein Brennstoffzellensystem 14 und einen Kältekreis 16.

Das Brennstoffzellensystem 14 umfasst einen Reformer 18, dem über einen Brennstoffstrang 20 aus einem nicht dargestellten Brennstofftank Brennstoff zuführbar ist. Ferner ist dem Reformer 18 an einer zweiten Brennstoffzuführstufe mittels eines Brennstoffstrangs 22 ebenfalls aus dem Brennstofftank Brennstoff zuführbar. Als Brennstoffsorten kommen Diesel, Benzin, Erdgas und weitere aus dem Stand der Technik bekannte Brennstoffsorten in Frage. Weiterhin ist dem Reformer 18 über einen Oxidationsmittelstrang 24 Oxidationsmittel, d.h. insbesondere Luft, zuführbar. Das von dem Reformer 18 erzeugte Reformat ist einem Brennstoffzellenstapel 26 zuführbar. Alternativ kann anstatt des Brennstoffzellenstapels 26 auch nur eine Brennstoffzelle vorgesehen sein. Bei dem Reformat handelt es sich um ein wasserstoffhaltiges Gas, das in dem Brennstoffzellenstapel 26 mit Hilfe von über einen Kathodenzuluftstrang 28 geförderter Kathodenzuluft unter Erzeugung von elektrischer Energie und Wärme umgesetzt wird. Die erzeugte elektrische Energie ist über eine elektrische Leitung 30 einem Elektromotor 32, einer Batterie 34 und einer elektrischen Heizeinrichtung 36 der Klimaanlage 12 zuführbar. Dies kann auf direktem Weg erfolgen oder durch Einspeisung der Energie über einen zentralen Knoten in das elektrische Bordnetz des Kraftfahrzeugs 10. Im dargestellten Fall ist das Anodenabgas über einen Anodenabgasstrang 38 einer Mischeinheit 40 eines Nachbrenners 42 zuführbar. Ferner ist dem Nachbrenner 42 über einen Brennstoffstrang 44 Brennstoff aus dem Brennstofftank und über einen Oxidationsmittelstrang 46 Oxidationsmittel zuführbar. In den Brennstoffsträngen 20, 22 und 44 sind geeignete, nicht dargestellte Fördereinrichtungen, wie beispielsweise Pumpen, angeordnet. Ebenso sind in den Oxidationsmittelsträngen 24 und 46 entsprechende, nicht dargestellte Fördereinrichtungen, in diesem Fall vorzugsweise Gebläse, angeordnet. Diese Fördereinrichtungen können direkt vom Brennstoffzellenstapel 26 oder von der Batterie 34 mit Strom versorgt werden. In dem Nachbrenner 42 erfolgt eine Umsetzung des abgereicherten Anodenabgases mit dem geförderten Brennstoff und Oxidationsmittel zu einem Verbrennungsabgas, welches in einer Mischeinheit 48 mit Kathodenabluft vermischt wird, die über einen Kathodenabluftstrang 50 von dem Brennstoffzellenstapel 26 zu der Mischeinheit 48 gefördert wird. Das Verbrennungsabgas, welches nahezu keine Schadstoffe enthält, durchströmt einen Wärmetauscher 52 zum Vorwärmen der Kathodenzuluft und verlässt schließlich das Brennstoffzellensystem 14 über einen Abgasauslass 54.

In dem Kältekreis 16 sind ein Kompressor 56, ein Kondensator 58, ein Expansionsorgan 60 und ein Verdampfer 62 angeordnet. Der Kompressor 56 ist von dem Elektromotor 32 antreibbar, welcher wiederum vorzugsweise durch den Brennstoffstoffzellenstapel 26 des Brennstoffzellensystems 14 mit Energie versorgt wird, aber kurzzeitig auch von der Batterie 34 mit Energie versorgt werden kann. Dem Verdampfer 62 ist ein Gebläse 64 zugeordnet. Über eine Außenluftleitung 66 kann von Außen Umgebungsluft angesaugt werden. Der Begriff "von Außen", wie er im Zusammenhang mit dieser Erfindung verwendet wird, bedeutet dabei von außerhalb des Innenraumes 78, bezeichnet somit die das Kraftfahrzeug 10 umgebende Luft. Die Außenluftleitung 66 führt zu einer Stelleinrichtung 68, welche die Außenluft dem Gebläse 64 zuführen kann. Die von der Stelleinrichtung 68 zum Gebläse 64 geleitete Luft strömt als Luftstrom 70 an dem Verdampfer 62 vorüber. Auf diese Weise kann dem Luftstrom 70 durch den Verdampfer 62 Wärmeenergie entzogen werden. Der gekühlte Luftstrom kann dann über eine Stelleinrichtung 72, eine Luftführung 74 und eine Hutablage 76 einem Fahrzeuginnenraum 78 zugeführt werden. Die Stelleinrichtung 72 kann beispielsweise durch ein Elektromagnetventil oder durch Rückschlagventile, welche jeweils nur eine Strömung von den beiden Zuleitungen hin zur Luftführung 74 zulassen, realisiert werden. Die gekühlte Luft strömt durch den Fahrzeuginnenraum 78 und verlässt diesen zumindest teilweise durch Luftkanäle 96, die in einer Sitzbank 80, vorzugsweise der hinteren Sitzbank, angeordnet sind. Die Luftkanäle 96 können über die gesamte Sitzbank gleichmäßig verteilt sein oder gezielt nur in bestimmten Bereichen der Sitzbank angebracht werden. Die Anordnung kann im Sitzpolster und/oder der Rückenlehne erfolgen. Ebenfalls können Luftkanäle 96 in der Kopfstütze 98 vorgesehen sein. Zusätzlich kann die Luft aus dem Fahrzeuginnenraum 78 über Kanäle unterhalb der Sitzbank 80 abströmen. Anschließend strömt die Luft über eine Luftführung 82 zurück zu der Stelleinrichtung 68, wo sie ganz oder teilweise nach Außen abgeführt wird oder zurück zum Gebläse 64 geleitet wird. Für die Führung der Luft nach Außen ist eine entsprechende Leitung vorgesehen, die aus Gründen der Übersichtlichkeit nicht dargestellt ist. Über die Schaltung der Stelleinrichtung 68 lässt sich somit wahlweise ein Frischluft- oder ein Umluftkonzept realisieren, bei dem Luft von Außen über die Außenluftleitung 66 angesaugt wird oder die Luft aus der Luftführung 82 rezirkuliert wird. Auch Mischformen dieser Betriebsarten sind möglich. Ferner kann mittels der Stelleinrichtung 68, die über die Außenluftleitung 66 eingeleitete Luft einer Luftführung 84 und über diese einem Gebläse 86 zugeführt werden. In diesem Falle strömt diese Luft als Luftstrom 88 an heißen Teilen des Brennstoffzellensystems 14 direkt vorüber oder durch (nicht dargestellte) Wärmetauscher, die zwischen dem Luftstrom 88 und den heißen Teilen vermitteln. Die heißen Teile des Brennstoffzellensystems 14 sind vorzugsweise der Reformer 18, der Brennstoffzellenstapel 26 und der Nachbrenner 42. Auf diese Weise kann durch die Abwärme der heißen Teile des Brennstoffzellensystems 14 dem Luftstrom 88 Wärmeenergie zugeführt werden. Der erwärmte Luftstrom 88 führt über eine Luftführung 90 zu der elektrischen Heizeinrichtung 36, die direkt von einer vom Brennstoffzellenstapel 26 erzeugten oder von der Batterie 34 gespeicherten Energie versorgt wird. Somit kann in einem Heizbetrieb die ohnehin schon vorgewärmte Luft in der Luftführung 90 weiter erwärmt werden und über die Stelleinrichtung 72 und die Luftführung 74 dem Innenraum 78 zugeführt werden. Nach dem Durchströmen des Innenraums 78 führt der Luftstrom über die Luftführung 82 zur Stelleinrichtung 68, wo er entweder nach Außen abgeführt wird oder zurück zum Gebläse 86 geleitet wird. Auch hierbei lässt sich über die Schaltung der Stelleinrichtung 68 somit wahlweise in einem solchen Heizbetrieb ein Umluftkonzept realisieren, bei dem Luft von Außen über die Außenluftleitung 66 angesaugt wird oder die Luft aus der Luftführung 82 rezirkuliert wird.

Nachfolgend werden verschiedene Betriebszustände aufgezeigt, die mittels der vorstehend beschriebenen Klimaanlage realisierbar sind:

Kühlbetrieb mit Umluftzirkulation: In diesem Betriebszustand ist die Stelleinrichtung 68 so geschaltet, dass Luft aus dem Innenraum 78 über die Luftführung 82 zu dem Gebläse 64 geführt wird. Dieser Luftstrom 70 wird gekühlt und über die Stelleinrichtung 72 und die Luftführung 74 in den Innenraum 78 geführt, wodurch dieser gekühlt wird. Um im Kühlbetrieb ein Aufheizen des Kofferraums, in dem die Klimaanlage 12 angeordnet ist, zu vermeiden, sind entsprechende (nicht dargestellte) Gebläse und Leitungen vorgesehen, welche die Abwärme des Brennstoffzellensystems 14 und die Abwärme des Kondensators 58 nach Außen abführen.

Kühlbetrieb mit Außenluftzuführung: In diesem Betriebszustand ist die Stelleinrichtung 68 so geschaltet, dass Außenluft über die Außenluftleitung 66 zu dem Gebläse 64 geführt wird. Der Luftstrom 70 wird gekühlt und über die Stelleinrichtung 72 und die Luftführung 74 in den Innenraum 78 geführt. Der über die Luftführung 82 aus dem Innenraum 78 führende Luftstrom wird von der Stelleinrichtung 68 nach Außen abgegeben. Hinsichtlich des Abführens der Abwärme des Brennstoffzellensystems 14 und des Kondensators 58 werden die im Rahmen des vorstehend beschriebenen Kühlbetriebs erläuterten Maßnahmen ergriffen.

Heizbetrieb mit Umluftzirkulation: In diesem Betriebszustand wird über die Luftführung 82, die Stelleinrichtung 68 und die Luftführung 84 ein Luftstrom 88 aus dem Innenraum 78 zum Gebläse 86 geführt. Der Kältekreis 16 ist nicht in Betrieb, d.h. der Elektromotor 32 wird nicht betrieben. Das Gebläse 86 führt den Luftstrom 88 an den heißen Teilen des Brennstoffzellensystems 14 vorüber. Die auf diese Weise vorgewärmte Luft wird mittels der Luftführung 90 zu der elektrischen Heizeinrichtung 36 und weiter zur Stelleinrichtung 72 geführt. Die elektrische Heizeinrichtung 36 wird zur Erwärmung der Luft in der Luftführung 90 mit elektrischem Strom betrieben. Anschließend strömt die erwärmte Luft über die Stelleinrichtung 72 und die Luftführung 74 in den Innenraum 78.

Heizbetrieb mit Außenluftzuführung: In diesem Betriebszustand wird Außenluft über die Außenluftleitung 66 von der Stelleinrichtung 68 der Luftführung 84 zugeführt. Die durch den Betrieb des Brennstoffzellensystem 14 entstehende Abwärme erwärmt den Luftstrom 88. Dieser erwärmte Luftstrom wird, wie im vorstehend beschriebenen Betriebszustand, über die Luftführung 90, die elektrische Heizeinrichtung 36, die Stelleinrichtung 72 und die Luftführung 74 in den Innenraum 78 geleitet. Anschließend wird dieser Luftstrom über die Luftführung 82 zur Stelleinrichtung 68 geführt, wo er nach Außen abgegeben wird.

Diese unterschiedlichen Betriebszustände werden über eine elektronische Steuereinheit angesteuert, die je nach Temperatur im Innenraum 78, Außentemperatur, eingestellten Solltemperaturen und gewünschtem Klimatisierungsbetrieb den geeigneten Betriebszustand auswählt. Diese elektronische Steuereinheit ist aus Gründen der Übersichtlichkeit in den Figuren nicht dargestellt, jedoch ist dem Fachmann sofort ersichtlich, dass diese zumindest mit den entsprechenden Fördereinrichtungen in den Strängen 20, 22, 24, 44 und 46 der Energieverteilung in der elektrischen Leitung 30, den Gebläsen 64 und 86, der elektrischen Heizeinrichtung, dem Elektromotor 32, den Stelleinrichtungen 68 und 72 sowie den entsprechenden Temperatursensoren verbunden ist.

Die vorstehend beschriebene Strömungsrichtung im Fahrzeuginnenraum 78, d.h. Einführen der Luft über die Hutablage 76 und Abführen der Luft unterhalb der Sitzbank 80 kann im Kühl- und/oder Heizbetrieb auch umgekehrt sein. Für eine derartige Abwandlung müsste entsprechend die Luftführung 74 durch Luftkanäle 96 der Sitzbank 80 in den Fahrzeuginnenraum 78 münden und die Luftführung 82 über die Hutablage 76 in den Fahrzeuginnenraum 78 münden. Eine solche Strömungsrichtung bietet sich insbesondere bei hohem Klimatisierungsbedarf an. Ist beispielsweise eine starke Kühlung in heißen Wüstenregionen erwünscht, so kann durch das Einströmen von gekühlter Luft über die Sitzbank diese vorgekühlt werden. Ebenfalls kann während der Fahrt eine zusätzliche Kühlung des Sitzes erfolgen. Je nach den persönlichen Vorlieben der Insassen kann sogar ein Einströmen von gekühlter Luft über oben gelegene Bereiche der Rückenlehne oder die Kopfstütze 98 erfolgen.

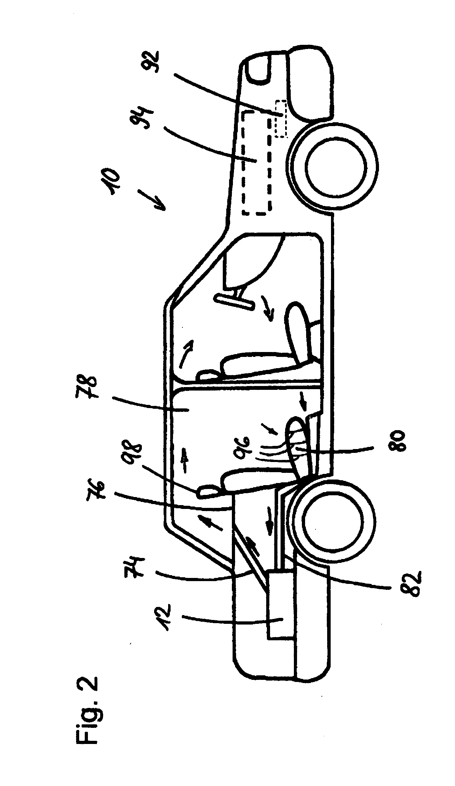

Figur 2 zeigt eine schematische Darstellung des Kraftfahrzeugs 10 mit der erfindungsgemäßen Klimaanlage 12 gemäß dem ersten Ausführungsbeispiel. In Figur 2 ist insbesondere die Einbaulage der Klimaanlage 12 veranschaulicht. Die erfindungsgemäße Klimaanlage 12 ist im Kofferraum montierbar, vorzugsweise als nachrüstbare Einheit. Zusätzlich zur beschriebenen Klimaanlage 12 hat das Kraftfahrzeug 10 eine herkömmliche Klimaanlage 92, bei der ein Kompressor eines herkömmlichen Kältekreises mechanisch von einem Antriebsaggregat 94, vorzugsweise einem Verbrennungsmotor, antreibbar ist. Während der Fahrt des Kraftfahrzeugs 10 und dem damit verbundenen Betrieb des Antriebsaggregats 94 kann der Innenraum 78 über die herkömmliche, fahrzeugeigene Klimaanlage 92 in allgemein bekannter Weise gekühlt bzw. mittels Abwärme des Antriebsaggregats 94 erwärmt werden. Bei Stillstand des Antriebsaggregats 94 kann der Innenraum 78 über die erfindungsgemäße Klimaanlage 12 klimatisiert werden.

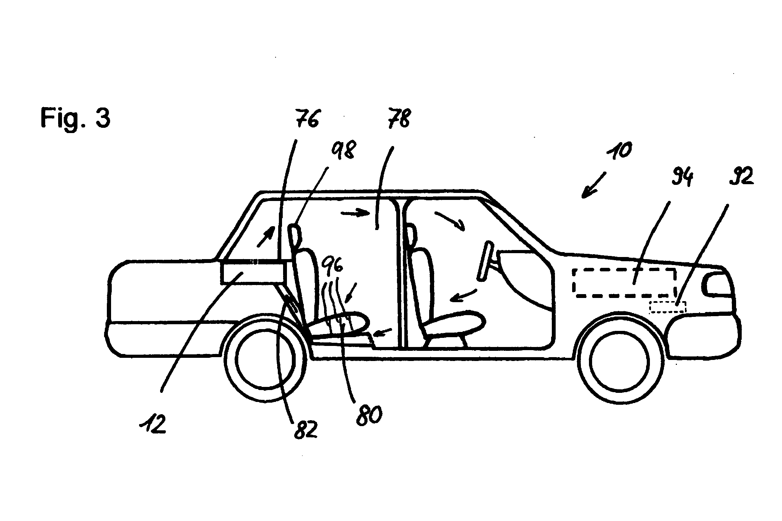

Figur 3 zeigt eine schematische Darstellung des Kraftfahzeugs mit der erfindungsgemäßen Klimaanlage gemäß einem zweiten Ausführungsbeispiel. Zur Vermeidung von Wiederholungen werden an dieser Stelle nur die Unterschiede des zweiten Ausführungsbeispiels gegenüber dem ersten Ausführungsbeispiel erläutert. Das zweite Ausführungsbeispiel unterscheidet sich vom ersten Ausführungsbeispiel im Wesentlichen dadurch, dass die Klimaanlage 12 unterhalb der Hutablage 76 hängend montiert ist. Dazu wird die Klimaanlage 12 direkt an die Hutablage 76, an ein (nicht dargestelltes) Karosserieblech oder an (nicht dargestellte) Karosserieverstrebungen montiert. Die Luftführung 74 kann ganz entfallen oder stark verkürzt werden, da die Luft direkt aus der Klimaanlage 12 über entsprechende Einlassöffnungen in der Hutablage 76 in den Fahrzeuginnenraum 78 strömen kann.

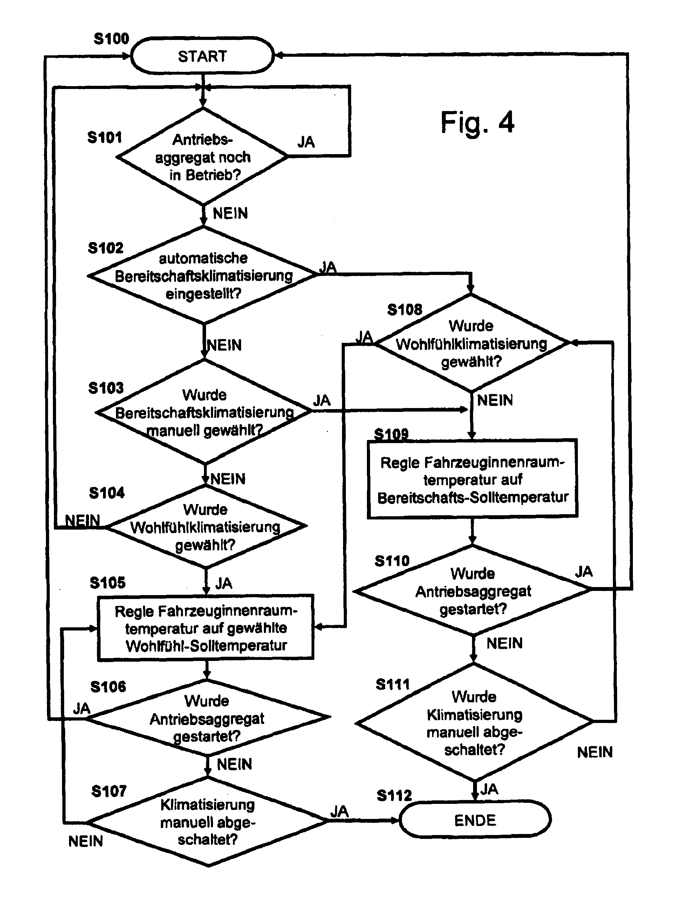

Figur 4 zeigt ein Flussdiagramm des Klimatisierungsbetriebs der erfindungsgemäßen Klimaanlage 12 gemäß dem ersten und zweiten Ausführungsbeispiel. Die Routine aus Figur 4, welche von der elektronischen Steuereinheit ausgeführt wird, startet bei Schritt S100, wenn die Klimaanlage 12 manuell eingeschaltet wird. Bei Schritt S101 wird bestimmt, ob das Antriebsaggregat 94 immer noch in Betrieb ist. Der Prozess fährt erst dann zu Schritt S102 fort, wenn die Abfrage in Schritt S101 negativ ist. In Schritt S102 wird bestimmt, ob der Benutzter über einen Auswahlschalter oder eine entsprechende Programmierung der Klimaanlage 12 einen automatischen Bereitschaftsbetrieb ausgewählt hat. Falls dies nicht der Fall ist, fährt der Prozess zu Schritt S103 fort, wo bestimmt wird, ob der Benutzer manuell eine Bereitschaftsklimatisierung ausgewählt hat. Ist dies nicht der Fall, dann fährt der Prozess zu Schritt S104 fort, wo bestimmt wird, ob der Benutzer manuell eine Wohlfühlklimatisierung ausgewählt hat. Falls dies mit "JA" zu beantworten ist, fährt der Prozess zu Schritt S105 fort, bei dem eine Wohlfühlklimatisierung durchgeführt wird. Bei dieser Wohlfühlklimatisierung wird der Innenraum 78 des Kraftfahrzeugs 10 auf eine Wohlfühltemperatur (z.B. 18°C) klimatisiert, indem eine Auswahl aus den verschiedenen Heiz- und Kühlmodi von der elektronischen Steuereinheit getroffen wird. Mit dem nachfolgenden Schritt S106 wird festgelegt, dass diese Wohlfühlklimatisierung automatisch gestoppt wird, wenn das Antriebsaggregat 94 gestartet wird. Wenn in Schritt S106 demnach bestimmt wird, dass das Antriebsaggregat 94 noch nicht läuft, wird in S107 bestimmt, ob die Klimaanlage 12 manuell abgestellt wurde. Bei einer manuellen Abschaltung endet der Prozess bei Schritt S112, ansonsten kehrt der Prozess zurück zu Schritt S105. Falls der Benutzer in Schritt S104 keine Wohlfühlklimatisierung gewählt hat, kehrt der Prozess zu Schritt S101 zurück. Falls in Schritt S102 bestimmt wurde, dass eine automatische Bereitschaftsklimatisierung gewählt wurde, dann fährt der Prozess von dort zu Schritt S108 fort, wo bestimmt wird, ob von dem Benutzer manuell eine Wohlfühlklimatisierung gewählt wurde. Ist dies der Fall, dann fährt der Prozess zu Schritt S105 fort, wo die bereits beschriebene Wohlfühlklimatisierung durchgeführt wird. Falls in Schritt S108 bestimmt wird, dass der Benutzer keine Wohlfühlklimatisierung ausgewählt hat, dann fährt der Prozess zu Schritt S109 fort, wo die erfindungsgemäße Bereitschaftsklimatisierung durchgeführt wird. Bei dieser Bereitschaftsklimatisierung wird die Temperatur im Innenraum 78 auf eine Bereitschafts-Solltemperatur (z.B. 25°C) geregelt, die sich von der Wohlfühltemperatur unterscheidet. Dies wird realisiert, indem die elektronische Steuereinheit in geeigneter Weise aus den beschriebenen Heiz- und Kühlbetriebsarten auswählt. Ist die Außentemperatur hoch, dann ist die Bereitschafts-Solltemperatur größer als die Wohlfühltemperatur. Ist hingegen die Außentemperatur niedrig, dann ist die Bereitschafts-Solltemperatur geringer als die Wohlfühltemperatur. Somit wird beispielsweise bei hoher Außentemperatur ein Aufheizen des Innenraumes 78 verhindert und im Bedarfsfall ein sehr schnelles Erreichen der Wohlfühltemperatur gewährleistet, weil der Innenraum 78 bereits "vorgekühlt" ist. Nach Schritt S109 fährt der Prozess zu Schritt S110 fort, wo überprüft wird, ob das Antriebsaggregat 94 gestartet wurde. Ist dies der Fall, dann kehrt der Prozess zu Schritt S100 zurück. Ansonsten fährt der Prozess zu Schritt S111 fort, wo bestimmt wird, ob der Benutzer die Klimatisierung manuell abgestellt hat - wenn "JA", dann endet der Prozess bei Schritt S112 und wenn "NEIN", dann kehrt der Prozess zu Schritt S108 zurück.

Der bevorzugte Betrieb der Klimaanlage 12 sieht in der Praxis so aus, dass eine automatische Bereitschaftsklimatisierung gewählt ist. Wird das Antriebsaggregat 94 betrieben, dann kann der Innenraum 78 über die auf das Fahrzeug optimierte, sehr effektive und speziell ausgelegte Klimaanlage 92 klimatisiert werden. Sobald das Antriebsaggregat 94 abgestellt wird (und die Insassen das Kraftfahrzeug 10 eventuell verlassen), startet die Klimaanlage 12 die Bereitschaftsklimatisierung, die den Innenraum bei hoher Außentemperatur auf beispielsweise 25°C kühlt. Dieser Bereitschaftsklimatisierungsbetrieb kann mit 60 Litern Brennstoff problemlos 12 Tage im Dauerbetrieb erfolgen. Der Bereitschaftsklimatisierungsbetrieb wird solange durchgeführt, bis der Benutzer kurz vor Fahrtantritt eine Wohlfühlklimatisierung wählt, die dann den Innenraum 78 auf beispielsweise 18°C kühlt. Die Wohlfühlklimatisierung wird dann solange durchgeführt bis das Antriebsaggregat 94 wieder gestartet wird.

Obwohl vorstehend beschrieben wurde, dass die Klimaanlage 12 nur im Stand, d.h. bei Stillstand des Antriebsaggregats 94, betrieben wird, ist dies nur die bevorzugte Betriebsweise und es ist auch möglich, die Klimaanlage 12 während des Betriebs des Antriebsaggregats 94 zu betreiben.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Kraftfahrzeug
- 12: Klimaanlage
- 14: Brennstoffzellensystem
- 16: Kältekreis
- 18: Reformer
- 20: Brennstoffstrang
- 22: Brennstoffstrang
- 24: Oxidationsmittelstrang
- 26: Brennstoffzellenstapel
- 28: Kathodenzuluftstrang
- 30: Elektrische Leitung
- 32: Elektromotor
- 34: Batterie
- 36: Elektrische Heizeinrichtung
- 38: Anodenabgasstrang
- 40: Mischeinheit
- 42: Nachbrenner
- 44: Brennstoffstrang
- 46: Oxidationsmittelstrang
- 48: Mischeinheit
- 50: Kathodenabluftstrang
- 52: Wärmetauscher
- 54: Abgasauslass
- 56: Kompressor
- 58: Kondensator
- 60: Expansionsorgan
- 62: Verdampfer
- 64: Gebläse
- 66: Außenluftleitung
- 68: Stelleinrichtung
- 70: Luftstrom
- 72: Stelleinrichtung
- 74: Luftführung
- 76: Hutablage
- 78: Fahrzeuginnenraum
- 80: Sitzbank
- 82: Luftführung
- 84: Luftführung
- 86: Gebläse
- 88: Luftstrom
- 90: Luftführung
- 92: Herkömmliche Klimaanlage
- 94: Antriebsaggregat
- 96: Luftkanäle
- 98: Kopfstütze

## Patentansprüche

1. Kraftfahrzeug (10) mit einer Klimaanlage (12), die eine Brennstoffzelle (26) aufweist, wobei eine Luftführung zum Zuführen von Luft in einen zu konditionierenden Fahrzeuginnenraum (78) und zum Abführen von Luft aus dem Fahrzeuginnenraum vorgesehen ist, **dadurch gekennzeichnet,**
- **dass** die Klimaanlage (12) im Kofferraum des Kraftfahrzeugs (10) angeordnet ist und
- **dass** die Luftführung Luftkanäle (96) aufweist, die in einem Sitz (80) des Kraftfahrzeugs (10) angeordnet sind und in den Fahrzeuginnenraum (78) münden.

2. Kraftfahrzeug (10) mit einer Klimaanlage (12) nach Anspruch 1, **dadurch gekennzeichnet, dass** der Sitz (80) ein Rücksitz ist.

3. Kraftfahrzeug (10) mit einer Klimaanlage (12) nach Anspruch 1 oder 2, **dadurch gekennzeichnet, dass** über zumindest einen Teil der Luftkanäle (96) Luft in den Fahrzeuginnenraum einströmt (78).

4. Kraftfahrzeug (10) mit einer Klimaanlage (12) nach einem der vorangehenden Ansprüche, **dadurch gekennzeichnet, dass** über zumindest einen Teil der Luftkanäle (96) Luft aus dem Fahrzeuginnenraum (78) abströmt.

5. Kraftfahrzeug (10) mit einer Klimaanlage (12) nach einem der vorangehenden Ansprüche, **dadurch gekennzeichnet, dass** die Luftkanäle (96) zumindest teilweise eine Drosselwirkung aufbringen.

6. Kraftfahrzeug (10) mit einer Klimaanlage (12) nach einem der vorangehenden Ansprüche, **dadurch gekennzeichnet, dass** die Luftkanäle (96) zumindest teilweise keine Drosselwirkung aufbringen.

7. Kraftfahrzeug (10) mit einer Klimaanlage (12) nach einem der vorangehenden Ansprüche, **dadurch gekennzeichnet, dass** die Luftkanäle (96) zumindest teilweise verschließbar sind.

8. Verfahren zur Standklimatisierung eines Kraftfahrzeugs (10) mit einer Klimaanlage (12), die eine Brennstoffzelle (26) aufweist, wobei Luft einem zu konditionierenden Fahrzeuginnenraum (78) zugeführt wird und Luft aus dem Fahrzeuginnenraum abgeführt wird, **dadurch gekennzeichnet, dass** die Luft zumindest teilweise über Luftkanäle (96) geführt wird, die in einem Sitz (80) des Kraftfahrzeugs (10) angeordnet sind und in den Fahrzeuginnenraum (78) münden.

9. Verfahren zur Standklimatisierung nach Anspruch 8, **dadurch gekennzeichnet, dass** die Klimaanlage (12) im Kofferraum des Kraftfahrzeugs (10) angeordnet ist und der Sitz ein Rücksitz ist.

10. Verfahren zur Standklimatisierung nach Anspruch 8 oder 9, **dadurch gekennzeichnet, dass** über zumindest einen Teil der Luftkanäle (96) Luft in den Fahrzeuginnenraum (78) einströmt.

11. Verfahren zur Standklimatisierung nach einem der Ansprüche 8 bis 10, **dadurch gekennzeichnet, dass** über zumindest einen Teil der Luftkanäle(96) Luft aus dem Fahrzeuginnenraum (78) abströmt.

12. Verfahren zur Standklimatisierung nach einem der Ansprüche 8 bis 11, **dadurch gekennzeichnet, dass** die Luftkanäle (96) zumindest teilweise eine Drosselwirkung aufbringen.

13. Verfahren zur Standklimatisierung nach einem der Ansprüche 8 bis 12, **dadurch gekennzeichnet, dass** die Luftkanäle (96) zumindest teilweise keine Drosselwirkung aufbringen.

14. Verfahren zur Standklimatisierung nach einem der Ansprüche 8 bis 13, **dadurch gekennzeichnet, dass** die Luftkanäle (96) zumindest teilweise verschließbar sind.
